# EUROPEAN PATENT APPLICATION

(11) **EP 4 647 336 A1**
(43) Date of publication of application: **12.11.2025**
(21) Application number: 25382437.9
(22) Date of filing: 30.04.2025
(51) Int. Cl.: B64C 3/18, B64C 5/02, B64D 27/40, B64C 1/06, B64C 1/26

(54) **COMPOSITE SPAR**

(30) Priority: 07.05.2024 ES 202430354
(71) Applicant: AIRBUS OPERATIONS, S.L.U., 28906 Getafe (Madrid) (ES)
(72) Inventor: INIESTA LOZANO, Fernando, 280906 GETAFE (Madrid) (ES); MARTÍNEZ MUÑOZ, José Luis, 28036 MADRID (ES); MÁRQUEZ LÓPEZ, Ignacio José, 28906 GETAFE (Madrid) (ES); GALLEGOS ELVIRA, Alberto, 28906 GETAFE (Madrid) (ES); GOMEZ VIZCAINO, Raul-José, 28906 GETAFE (Madrid) (ES)
(74) Representative: Herrero & Asociados, S.L.

(57) **Abstract**

Composite spar (100) for horizontal structures external to the fuselage of an aircraft, the composite spar (100) comprising a web (110) configured as a longitudinal element, upper and lower flanges (110a) and two distal ends, wherein for each end, the composite spar (100) comprises an end portion (105) established in the longitudinal direction of the web (110), and a curved-edged end portion (120) with curved flanges (120a) and a truncated section (125) established in the transverse direction of the web (110), wherein the truncated section (125) is connectable to a frame of the fuselage of the aircraft and configured as a load transfer element between the web (110) and the frame, and wherein one or more of the lower flanges (110a) are connected to the curved flanges (120a).

## Description

### Object of the invention

The present invention relates to a composite spar for horizontal structures external to an aircraft fuselage and to manufacturing methods.

The present invention relates to advanced CFRP (carbon fiber reinforced polymer) structures, also known as composite structures, and their use in aircrafts.

### Background of the invention

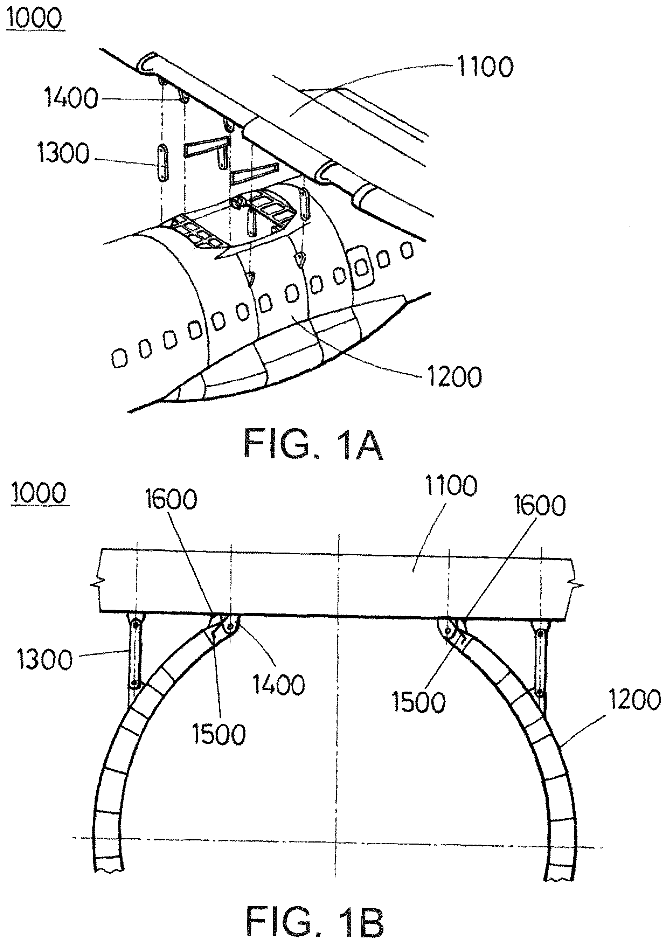

Figure 1A shows a first solution of the state of the art for joining the central box (1100) of the wing to the fuselage (1200) of an aircraft (1000) by means of normally metal accessories to transfer loads from the central box (1100) to the frame of the fuselage (1200).

Figure 1B shows a sectional view of Figure 1A wherein some metal accessories can be seen to transfer loads from the central box (1100) to the frame of the fuselage (1200), such as reinforcement bars (1300), fixing terminals (1400), as well as cutting webs (1500) and sealing points (1600).

A second solution for joining the central box to the aircraft fuselage involves integrating the center box into the fuselage frames. However, this solution requires cutting the left and right outer boxes, which are then attached to the central box using metal ribs and fittings.

Both state-of-the-art solutions require the use of metal accessories and fittings to join the central wing box to the aircraft fuselage.

There is a demand for a solution that allows the central box to be joined to the aircraft fuselage without requiring the use of metal fittings/accessories, thus reducing the assembly and maintenance effort, as well as reducing the weight of the structure.

WO2011086221A2 describes a support pylon for aircraft engines joined to a section of the fuselage having a curved, closed cross-section including a skin and a plurality of frames. Its structural configuration comprises a central box inside the fuselage and two external side boxes on both sides thereof, all of which are made of composite material, the three boxes being structured as multi-spar boxes with upper and lower skins, side spars and at least one central spar. As joining means, rows of tension fittings are described between, respectively, the side spars of the external boxes and the side spars of the central box with tension bolts that cross the fuselage skin. The tension fittings are connected to said side spars by means of cutting rivets.

Thus, there is also a demand for solutions that allow support pylons for aircraft engines to be joined to the aircraft fuselage/airframe without requiring the use of metal fittings/accessories, rivets, etc., thereby reducing assembly and maintenance efforts and reducing the weight of the aircraft structure.

Generally, and given the state of the art, there is a demand for solutions for horizontal structures external to the aircraft fuselage, configured to be connected to the aircraft airframe more efficiently, while improving manufacturing and maintenance processes and reducing the weight of the aircraft structure.

The present invention satisfies this demand.

### Description of the invention

The present invention relates to composite spars used for the manufacture of horizontal structures external to the aircraft fuselage, wherein said structures can be integrated into the aircraft's aerostructure in a more efficient manner, compared to the state of the art, without requiring the use of metal fittings/accessories or other connecting elements.

These structures can be, for example, a central box, a horizontal stabilizer, the support pylon for aircraft engines, etc. These structures are composed of composite spars that allow the connection of the structures to the fuselage of the aircraft and achieve a progressive load transfer through parts of the spar that comprise shapes adapted for load transmission, in contrast to the state of the art, wherein load transfer is carried out by means of normally metal elements or accessories.

The composite spar according to the present invention is a fuselage-integrable component that combines the structural functions of a longitudinal member and a frame member in a single piece, made entirely of carbon fiber-reinforced plastic or composite.

The composite spar can be used for any horizontal structure that requires connection to the aircraft's aerostructure. For example, the composite spar can be used in an aircraft's central wing box, for a horizontal stabilizer, for a horizontal pylon supporting one or more engines, etc.

In a first aspect, the invention relates to a composite spar for horizontal structures external to an aircraft fuselage, the composite spar comprising a web configured as a longitudinal element, upper and lower flanges, and two distal ends. At each distal end, the spar comprises a first end portion established in the longitudinal direction of the web, and a second end portion comprising curved edges with curved flanges and a truncated section established in the transverse direction of the web. The truncated section is connectable to a frame of the aircraft fuselage and is configured as a load transfer element between the web and the frame. In addition, one or more lower flanges are connected to the curved flanges.

In one example, the upper and lower flanges are rectilinear.

In another example, the end portion established in the longitudinal direction of the web comprises a second truncated section that allows the composite spar to be connected to other aircraft structures.

In a first preferred example, the spar further comprises a first reinforcement piece comprising a portion of the web and first reinforcement flanges comprising shapes equivalent to a portion of the lower flanges and a portion of the curved flanges.

In a second preferred embodiment, the composite spar further comprises a second reinforcing piece comprising a web portion and second reinforcing flanges comprising rectilinear shapes configured to connect the lower flanges along the surface of the curved-edged end portion.

In one embodiment of the second preferred example, the second reinforcement piece further comprises third reinforcement flanges comprising curved shapes configured to connect the curved flanges to the second reinforcement flanges.

In a third preferred example, the composite spar further comprises a third reinforcement piece comprising third reinforcement flanges comprising curved shapes configured to connect the curved flanges to the upper flanges and equivalent shapes to portions of the lower flanges and portions of the curved flanges.

A second aspect relates to a central box of an aircraft wing comprising a plurality of composite spars according to the preceding claims.

In a third aspect, the invention relates to a horizontal stabilizer comprising a plurality of composite spars according to the preceding claims.

In a fourth aspect, the invention relates to a horizontal support pylon for aircraft engines comprising a plurality of composite spars according to the preceding claims.

In a fifth aspect, the invention relates to a method for manufacturing the composite spar according to the first aspect of the invention. The method comprises pressing resin-pre-impregnated composite sheets to obtain a set of preforms, comprising a first preform comprising the web, distal end portions, comprising first end portions established in the longitudinal direction of the web, and one or more upper and lower flanges. The set of preforms further comprises second preforms comprising curvededge end portions, one or more upper flanges and curved flanges, as well as third preforms comprising one or more reinforcing pieces configured to reinforce the structure of the spar or for load transmission. The method further comprises cutting the set of preforms, integrating the set of preforms into a vacuum assembly mold, vacuum assembling the pieces to obtain a spar preform, curing the spar preform, and removing the assembly mold and cutting burrs from the cured preform to obtain the composite spar.

In one example, obtaining third preforms comprises obtaining a first reinforcement piece comprising a portion of the web and first reinforcement flanges comprising shapes equivalent to a portion of the lower flanges and a portion of the curved flanges.

In one example, obtaining third preforms comprises obtaining a second reinforcement piece comprising a web portion and second reinforcement flanges comprising rectilinear shapes configured to connect the lower flanges along the surface of the curved-edged end portion.

In one example, obtaining the second reinforcement piece further comprises obtaining third reinforcement flanges comprising curved shapes configured to connect the curved flanges to the second reinforcement flanges.

In one example, obtaining third preforms comprises obtaining a third reinforcement piece comprising fourth reinforcement flanges comprising curved shapes configured to connect the curved flanges to the upper flanges and equivalent shapes to portions of the lower flanges and portions of the curved flanges.

In an eighth aspect, the invention relates to a method of manufacturing a horizontal support pylon for a aircraft engines, the method comprising assembling a plurality of composite spars according to the first aspect of the invention.

### Description of the drawings

In order to complement the description being made and in order to help a better understanding of the features of the composite spar in accordance with the present invention, some schematic figures are attached as an integral part of said description, wherein, for illustrative and non-limiting purposes, the following has been represented:
Figure 1A shows one type of connection of the central box to the fuselage of an aircraft. Figure 1B shows a sectional view of Figure 1A.
Figure 2 shows a composite spar according to the present invention.
Figure 3 shows the preforms that, when assembled, form a first example of the composite spar according to the present invention.
Figures 4A, 4B, and 4C show the preforms that, when assembled, form a second example of a composite spar according to the present invention.
Figures 5A and 5B show the preforms that, when assembled, form a third example of a composite spar according to the present invention.
Figure 6 shows a manufacturing method for composite spars according to the present invention.

### Detailed embodiment of the invention

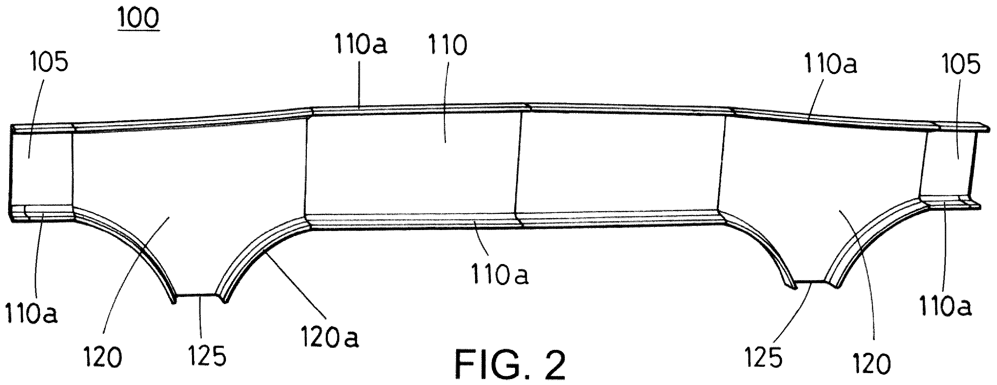

Figure 2 shows an example of a composite spar (100) according to the present invention. The composite spar (100) may be designed for a central box of an aircraft wing or for another type of horizontal structure external to the aerostructure, such as a horizontal stabilizer or a pylon.

The composite spar (100) comprises a web (110) configured as a longitudinal element, as well as upper flanges (110a) and lower flanges (110a). As can be seen in the figure, the composite spar (100) comprises two distal ends.

For each distal end, the composite spar (100) comprises an end portion (105) arranged in the longitudinal direction of the web (110), and a curved-edged end portion (120) and a truncated section (125) arranged in the transverse direction of the web (110).

Furthermore, the spar comprises curved flanges (120a) arranged at the curved-edged end portion (120). As shown in Figure 2, the lower flanges (110a) are connected to the curved flanges (120a).

The truncated section (125) of the first curved-edged end portion (120) is connectable to a frame of the aircraft fuselage and allows load transfer between the web (110) and the frame. The fact that the section is truncated means that there is a plane that cuts the surface of the curved-edged end portion (120) as shown in Figure 2. Other examples of truncated elements are, for example, a truncated pyramid.

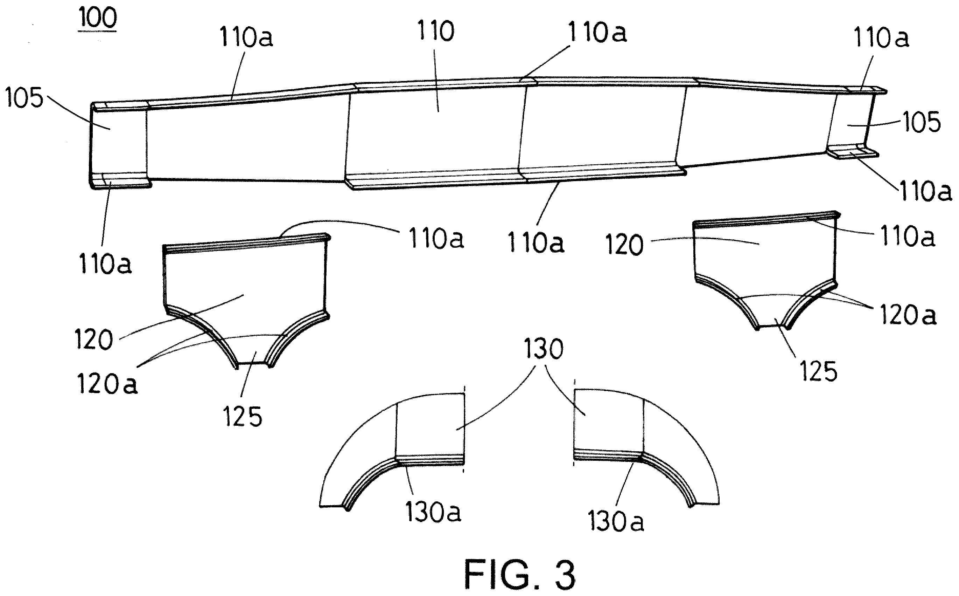

Figure 3 shows a set of preforms forming a first example of a composite spar (100) according to the present invention. The preforms are intermediate pieces having a specific geometric configuration. The preforms are semi-rigid pieces, which become permanently rigid during the curing of the final piece. The final piece is obtained by vacuum-assembling the set of preforms.

Preforms are semi-rigid, pre-formed intermediate pieces with a geometric configuration. Their shape is definitively fixed during the final curing of all assembled preforms, resulting in the composite spar (100).

Figure 3 shows in the upper part of the figure a preform comprising parts of the composite spar (100), such as: the web (110) with two distal ends comprising the end portions (105) established in the longitudinal direction of the web (110), as well as upper and lower flanges (110a) of the composite spar (100).

Figure 3 shows in the middle part of the figure two preforms comprising the curved-edged end portions (120) comprising curved flanges (120a), as well as some upper flanges (110a). As can be seen in Figure 3, the curved-edged end portions (120) comprise the truncated section (125) that allows the connection of the composite spar (100) to the frame of the aircraft fuselage and allows the load transfer between the web (110) and the frame.

Figure 3 shows in the lower part of the figure two comprising two first reinforcing pieces (130) that can be assembled together with the rest of the preforms and comprise reinforcing parts, in particular, a part of the web (110) and first reinforcing flanges (130a) equivalent to some lower flanges (110a) and to some curved flanges (120a) of the composite spar (100). The first reinforcing pieces (130) make it possible to improve the transition of the different parts of the composite spar (100) and to reinforce the flanges of the composite spar (100), for example, lower flanges (110a) and curved flanges (120a).

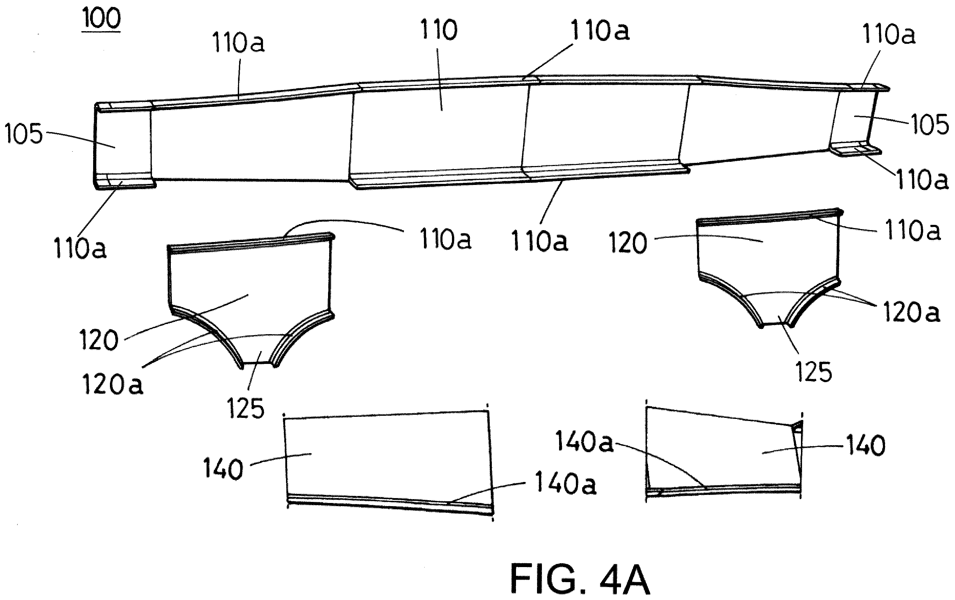

Figure 4A shows a set of preforms forming a first example of a composite spar (100) according to the present invention.

Figure 4A shows in the upper part of the figure a preform comprising parts of the composite spar (100), such as: the web (110) with two distal ends comprising the end portions (105) established in the longitudinal direction of the web (110), as well as upper and lower flanges (110a) of the composite spar (100).

Figure 4A shows in the middle part of the figure two preforms comprising the curved-edged end portions (120) comprising curved flanges (120a), as well as some upper flanges (110a). As can be seen in Figure 3, the curved-edged end portions (120) comprise the truncated section (125) that allows the connection of the composite spar (100) to the frame of the aircraft fuselage and allows the load transfer between the web (110) and the frame.

Figure 4A shows in the lower part of the figure two preforms comprising two second reinforcement pieces (140) that can be assembled together with the rest of the preforms and that comprise, a part of the web (110) and second reinforcement flanges (140a) that comprise a rectilinear shape and that are configured to connect the lower flanges (110a) along the surface of the curved-edged end portion (120).

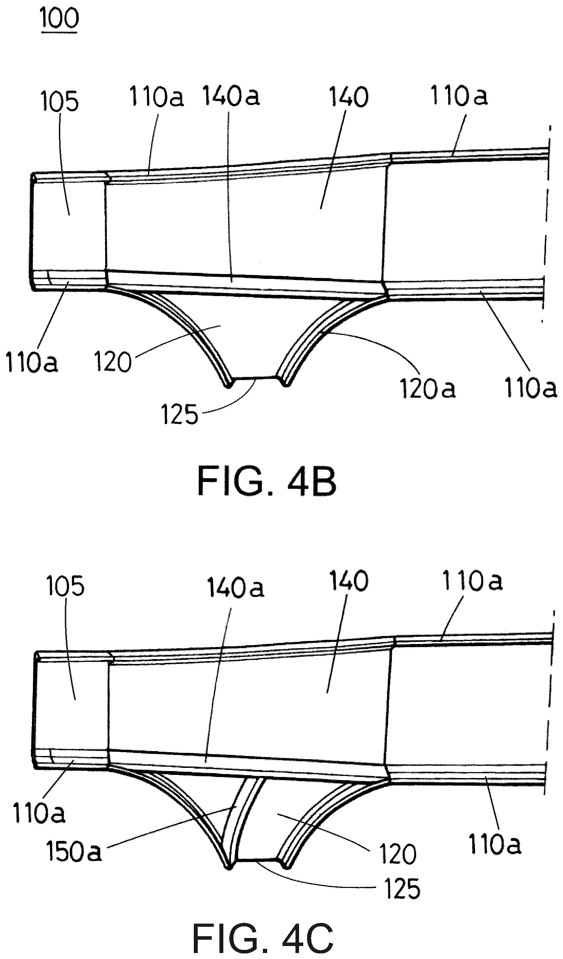

Figure 4B shows a portion of the composite spar (100) comprising a set of assembled preforms. In particular, Figure 4B shows the end portion (105) established in the longitudinal direction of the web (110) and the curved-edged end portion (120) of one of the distal ends of the composite spar (100). In addition, the curved flanges (120a) established in the curved-edged end portion (120) can be seen, as well as the truncated section (125) that allows the connection of the composite spar (100) to the frame of the fuselage of the aircraft. Some lower flanges (110a) and upper flanges (110a) of the composite spar (100) can also be seen.

Figure 4B also shows the second reinforcement piece (140) comprising a part of the web (110) and second reinforcement flanges (140a) comprising a rectilinear shape and configured to connect the lower flanges (110a) along the surface of the curved-edged end portion (120) as seen in said figure. The second reinforcement pieces (140) allow to improve the transition of the different parts of the composite spar (100) and to reinforce the flanges of the composite spar (100), for example, the lower flanges (110a) and the curved flanges (120a). In addition, second reinforcement flanges (140a) allow transmitting loads between the lower flanges (110) adjacent to the curved-edged end portion (120).

Figure 4C shows a portion of the composite spar (100) comprising a set of assembled preforms, analogously to Figure 4B. Additionally, in Figure 4C, the second reinforcing piece (140) comprises, in addition to the web (110) and the second reinforcing flanges (140a), third reinforcing flanges (150a) comprising a curved shape and configured to connect the curved flanges (120a) with the second reinforcing flanges (140a). The third reinforcing flanges (150a) allow the flanges of the composite spar (100) to be reinforced, for example, the curved flanges (120a) and to transmit loads between the curved flanges (120a) and the second reinforcing flanges (140a).

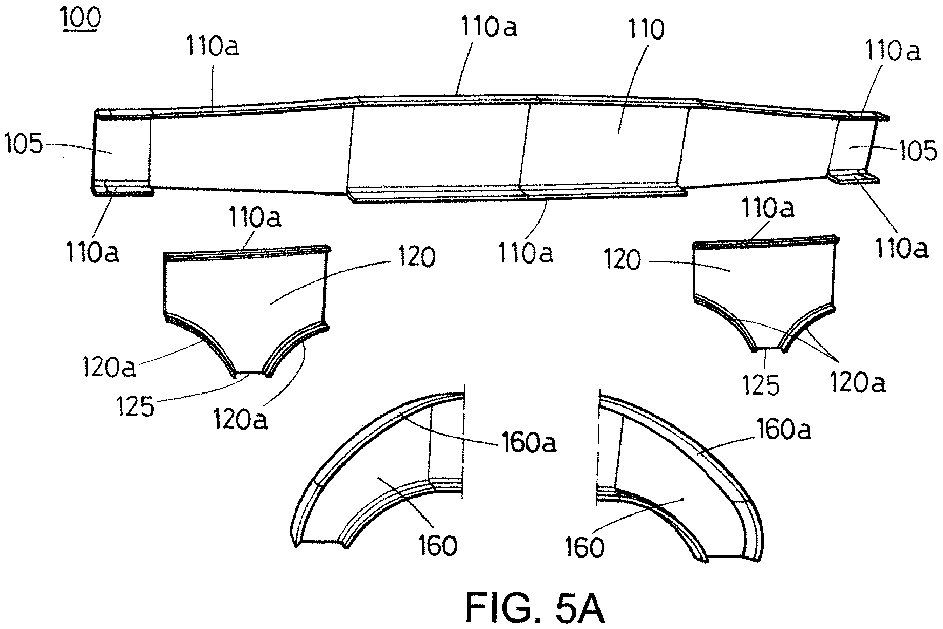

Figure 5A shows, in the upper part of the figure, a preform comprising parts of the composite spar (100), such as: the web (110) with two distal ends comprising the end portions (105) established in the longitudinal direction of the web (110), as well as upper and lower flanges (110a) of the composite spar (100).

Figure 5A shows, in the middle part of the figure, two preforms comprising the end portions with curved edges (120) comprising curved flanges (120a), as well as some upper flanges (110a). As can be seen in Figure 3, the curved-edged end portions (120) comprise the truncated section (125) that allows the connection of the composite spar (100) to the frame of the aircraft fuselage and allows the load transfer between the web (110) and the frame.

Figure 5A shows in the lower part of the figure two preforms comprising two third reinforcement pieces (160) that can be assembled together with the rest of the preforms and that comprise, a part of the web (110) and third reinforcement flanges (160a) that comprise curved shapes to connect the curved flanges (120a) to the upper flanges (110a) and shapes equivalent to the lower flanges (110a) and to the curved flanges (120a).

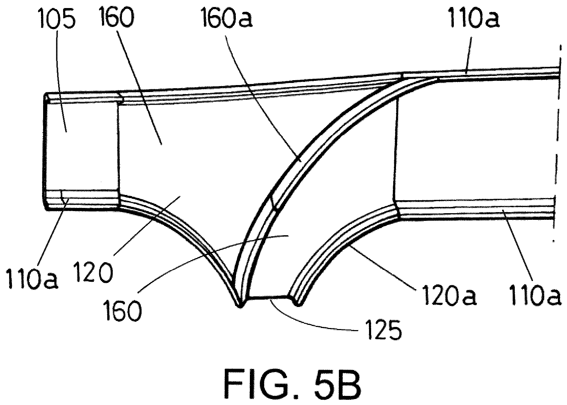

Figure 5B shows a portion of the composite spar (100) comprising a set of assembled preforms. In particular, Figure 5B shows the end portion (105) established in the longitudinal direction of the web (110) and the curved-edged end portion (120) of one of the distal ends of the composite spar (100). In addition, the curved flanges (120a) established in the curved-edged end portion (120) can be seen, as well as the truncated section (125) that allows the connection of the composite spar (100) to the frame of the fuselage of the aircraft. The lower flanges (110a) and upper flanges (110a) of the composite spar (100) can also be seen.

Figure 5B also shows the third reinforcement piece (160) comprising a web portion (110) and second reinforcement flanges (140a) and third reinforcement flanges (160a) comprising curved shapes for connecting the curved flanges (120a) to the upper flanges (110a) and equivalent shapes to the lower flanges (110a) and to the curved flanges (120a). The third reinforcement pieces (160) make it possible to improve the transition of the different portions of the composite spar (100) and to reinforce the flanges of the composite spar (100), for example, the curved flanges (120a) and the upper flanges (110a). In addition, the third reinforcement flanges (160a) allow loads to be transmitted between the curved flanges (120a) and the upper flanges (110a).

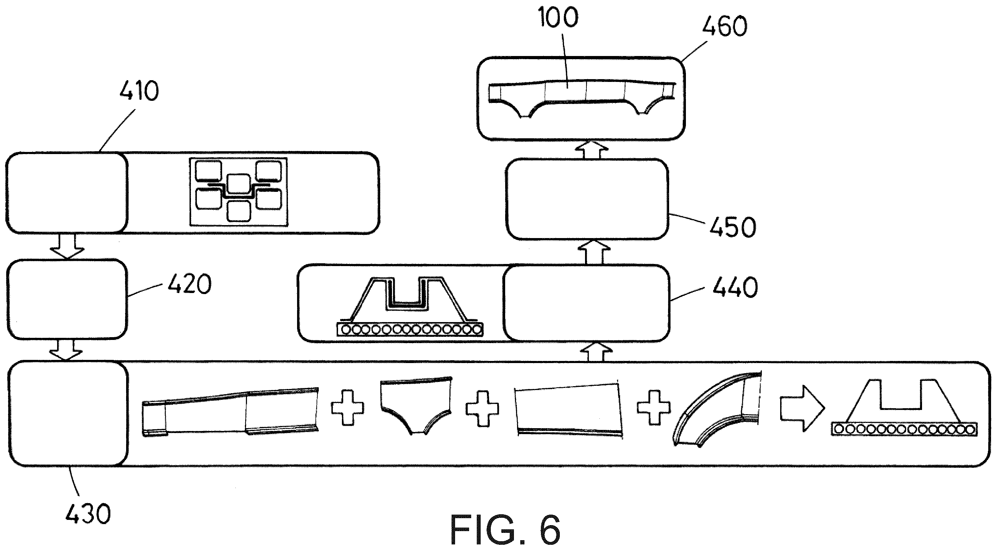

Figure 6 shows an example of a method (400) for manufacturing the composite spar (100) according to the present invention.

The method (400) comprises a step of pressing (410) resin-impregnated composite sheets to obtain a set of fresh preforms. The resin-impregnated composite sheets comprise resin-impregnated fibers.

The set of preforms may comprise a first preform comprising the web (110), distal end elements of the composite spar (100), such as the end portions (105) arranged in the longitudinal direction of the web (110), and upper and lower flanges (110a) of the composite spar (100).

The set of preforms may comprise two second preforms comprising end elements of the composite spar (100), such as the curved-edged end portions (120), as well as curved flanges (120a) and some upper flanges (110a).

The set of preforms may comprise one or more reinforcing pieces (130, 140, 160). The reinforcing pieces are assembled with the rest of the elements that make up the composite spar (100) and allow reinforcement of the final structure.

The method further comprises cutting (420) the set of preforms.

The method further comprises integrating (430) the set of preforms into an assembly mold.

The method (400) comprises vacuum-assembling (440) the parts to obtain a spar preform. In particular, this method can be carried out using a vacuum bag, as shown in Figure 6.

The method (400) comprises curing (450) or co-curing the spar preform to obtain the final rigid preform and removing it from the vacuum assembly mold (e.g., a vacuum bag). The resin in the pre-impregnated composite sheets is cured during the curing of the spar preform.

The method (400) comprises the step of cutting (460) burrs from the cured preform to obtain the composite spar (100).

Additionally, the method (400) may comprise an additional inspection step, e.g., an ultrasonic inspection.

## Claims

1. Composite spar (100) for horizontal structures external to the fuselage of an aircraft, the composite spar (100) comprising:
- a web (110) configured as a longitudinal element;
- upper and lower flanges (110a); and
- two distal ends, wherein for each end, the composite spar (100) comprises:
- an end portion (105) established in the longitudinal direction of the web (110), and
- a curved-edged end portion (120) with curved flanges (120a) and a truncated section (125) established in the transverse direction of the web (110),
- wherein the truncated section (125) is connectable to a frame of the aircraft fuselage and configured as a load transfer element between the web (110) and the frame, and wherein one or more of the lower flanges (110a) are connected to the curved flanges (120a).

2. Composite spar (100) according to claim 1, wherein the end portion (105) established in the longitudinal direction of the web (110) comprises a second truncated section that allows the connection of the composite spar (100) to other structures of the aircraft.

3. Composite spar (100) according to claim 1 or 2, wherein the upper and lower flanges (110a) are rectilinear.

4. Composite spar (100) according to claims 1 to 3, further comprising a first reinforcement piece (130) comprising a part of the web (110) and first reinforcement flanges (130a) comprising:
- shapes equivalent to a part of the lower flanges (110a) and a part of the curved flanges (120a).

5. Composite spar (100) according to claims 1 to 3, further comprising a second reinforcement piece (140) comprising a part of the web (110) and second reinforcement flanges (140a) comprising:
- rectilinear shapes configured to connect the lower flanges (110a) along the surface of the curved-edged end portion (120).

6. Composite spar (100) according to the preceding claim, wherein the second reinforcement piece (140) further comprises third reinforcement flanges (150a) comprising:
- curved shapes configured to connect the curved flanges (120a) with the second reinforcement flanges (140a).

7. Composite spar (100) according to claims 1 to 3, further comprising a third reinforcement piece (160) that comprises third reinforcement flanges (160a) comprising:
- curved shapes configured to connect the curved flanges (120a) to the upper flanges (110a); and
- shapes equivalent to parts of the lower flanges (110a) and parts of the curved flanges (120a).

8. Central box of the wing of an aircraft comprising a plurality of composite spars (100) according to claims 1 to 7.

9. Horizontal stabilizer comprising a plurality of composite spars (100) according to claims 1 to 7.

10. Horizontal support pylon for aircraft engines comprising a plurality of composite spars (100) according to claims 1 to 7.

11. Method (400) of manufacturing the composite spar (100) according to claims 1 to 7, the method comprising:
- pressing (410) resin pre-impregnated composite sheets to obtain a set of preforms, comprising:
- a first preform comprising the web (110), the end portions (105) arranged in the longitudinal direction of the web (110), and one or more upper and lower flanges (110a);
- second preforms comprising the curved-edged end portions (120), one or more upper flanges (110a), and the curved flanges (120a); and
- third preforms comprising one or more reinforcing pieces (130, 140, 160) configured to reinforce the structure of the composite spar (100);
- cutting (420) the set of preforms;
- integrating (430) the set of preforms into a vacuum assembly mold;
- vacuum assembling (440) the parts to obtain a spar preform;
- curing (450) the spar preform and removing the assembly mold; and
- cutting (460) burrs from the cured preform to obtain the composite spar (100).

12. Method (400) according to claim 11, wherein obtaining third preforms comprises obtaining a first reinforcement piece (130) comprising a part of the web (110) and first reinforcement flanges (130a) comprising:
- shapes equivalent to a part of the lower flanges (110a) and a part of the curved flanges (120a).

13. Method (400) according to claim 11, wherein obtaining third preforms comprises obtaining a second reinforcement piece (140) comprising a part of the web (110) and second reinforcement flanges (140a) comprising:
- rectilinear shapes configured to connect the lower flanges (110a) along the surface of the curved-edged end portion (120).

14. Method of the preceding claim, wherein obtaining the second reinforcement piece (140) further comprises obtaining third reinforcement flanges (150a) comprising
- curved shapes configured to connect the curved flanges (120a) with the second reinforcement flanges (140a).

15. Method (400) according to claim 11, wherein obtaining third preforms comprises obtaining a third reinforcement piece (160) that comprises third reinforcement flanges (160a) comprising:
- curved shapes configured to connect the curved flanges (120a) to the upper flanges (110a); and
- shapes equivalent to parts of the lower flanges (110a) and parts of the curved flanges (120a).

16. Method of manufacturing a horizontal support pylon for aircraft engines comprising assembling a plurality of composite spars (100) according to claims 1 to 7.
